# EUROPÄISCHE PATENTSCHRIFT

(11) **EP 3 038 960 B1**
(45) Veröffentlichungstag und Bekanntmachung des Hinweises auf die Patenterteilung: **10.01.2018**
(21) Anmeldenummer: 14744543.1
(22) Anmeldetag: 28.07.2014
(51) Int. Cl.: B65G 54/02

(54) **TRANSFERVORRICHTUNG MIT EINER LINEARMOTOR-ANTRIEBSVORRICHTUNG UND FEDERGELAGERTEN ABSTÜTZELEMENTEN**
TRANSFER DEVICE WITH A LINEAR MOTOR AND SPRING LOADED SUPPORT ELEMENT
DISPOSITIF DE TRANSFERT À ENTRAINEMENT À MOTEUR LINÉAIRE ET ÉLÉMENTS DE SUPPORT AMORTIS PAR RESSORTS

(30) Priorität: 26.08.2013 DE 102013216958
(43) Veröffentlichungstag der Anmeldung: 06.07.2016
(73) Patentinhaber: Robert Bosch GmbH, 70442 Stuttgart (DE)
(72) Erfinder: KATHAN, Philipp, CH-8246 Langwiesen (CH); WINDSHEIMER, Joshua, 74589 Satteldorf (DE); WILKE, Bernd, 71397 Leutenbach (DE); HANISCH, Markus, 70736 Fellbach (DE); GRAN, Sebastian, 35452 Heuchelheim (DE); VON EHRENSTEIN, Philipp Markus, 01187 Dresden (DE)
(86) Internationale Anmeldenummer: PCT/EP2014/066138
(87) Internationale Veröffentlichungsnummer: WO 2015/028223

(56) Entgegenhaltungen:
- WO-A1-2012/084648
- WO-A1-2013/156177
- WO-A1-2014/090462
- DE-A1-102010 027 925
- US-A- 4 867 579

## Beschreibung

### Stand der Technik

Die vorliegende Erfindung betrifft eine Transfervorrichtung, insbesondere für einen Produkttransport, beispielsweise einen Produkttransport zu einer Verpackungsmaschine.
Transfersysteme sind in unterschiedlichen Ausgestaltungen bekannt. Die DE 10 2011 003 178 A1 offenbart beispielsweise ein Transfersystem, bei dem ein bewegbares Förderelement auf einer ortsfesten, umlaufenden Laufschiene mittels einer Linearmotor-Antriebsvorrichtung bewegbar ist. Diese Vorrichtung hat sich grundsätzlich bewährt, allerdings können bei Kurvenfahrten ein Schlupf zwischen dem bewegbaren Förderelement und der Laufschiene auftreten. Auch können bei Kurven insbesondere erhöhte Abnutzungen an den Förderelementen und/oder der Laufschiene auftreten. Weiterhin ist aus der DE 10 2010 027 925 A1 eine Transportvorrichtung bekannt, welche ein gelenkiges Förderelement aufweist. Mittels des gelenkigen Förderelements können insbesondere die bei Kurvenfahrten auftretenden Probleme gelöst werden. Allerdings sind die gelenkigen Förderelemente relativ teuer und aufwändig in der Herstellung. Es wäre daher wünschenswert, ein einfach aufgebautes Transfersystem zu haben, welches insbesondere auch bei Kurven keine Abnutzungserscheinungen aufweist. Weiterhin ist aus der WO 2012/084648 A1 ist eine Transfer-Vorrichtung gemäß dem Oberbegriff des Anspruchs 1 bekannt.

### Offenbarung der Erfindung

Die erfindungsgemäße Transfervorrichtung mit den Merkmalen des Anspruchs 1 weist demgegenüber den Vorteil auf, dass auch bei Kurvenfahrten sowohl an einem bewegbaren Element als auch an einer feststehenden Laufschiene deutlich geringere Abnutzungserscheinungen auftreten. Erfindungsgemäß können insbesondere auch sehr enge Kurven und auch Gegenkurven mittels der Laufschiene vorgesehen sein, ohne dass es hierbei zu einem übermäßigen Gleiten oder Rutschen des bewegbaren Elements kommt. Dies wird erfindungsgemäß dadurch erreicht, dass die Transfervorrichtung ein bewegbares Element, eine feststehende Laufschiene und eine Linearmotor-Antriebsvorrichtung zum Antreiben des bewegbaren Elements aufweist. Das bewegbare Element weist Abstützelemente auf. Die Abstützelemente sind mit der Laufschiene in Kontakt bringbar, vorzugsweise mit an der Laufschiene vorgesehenen Laufflächen. Dabei weist wenigstens eines der Abstützelemente eine Kontaktfläche auf, welche in einem Winkel ungleich 90° zu einer Hochachse und einer Querachse des bewegbaren Elements angeordnet sind. Erfindungsgemäß sind somit Kontaktflächen der Abstützelemente in einem Winkel ungleich einem rechten Winkel zu einer Hochachse und Querachse des bewegbaren Elements angeordnet, wodurch auch bei Kurvenfahrten das unerwünschte Rutschen oder Schlupf oder dergleichen minimiert werden kann. Entsprechend dem Winkel der Kontaktbereiche der Abstützelemente sind auch die Laufflächen an der Laufschiene angeordnet. Die Kontaktbereiche der Abstützelemente können dabei Linienbereiche sein, z.B., wenn die Abstützelemente Rollen sind, oder Flächenbereiche, z.B., wenn die Abstützelemente Gleitelemente sind. Weiter sind die Abstützelemente federnd gelagert. Die federnde Lagerung stellt eine verbesserte Laufruhe des bewegbaren Elements auf der Laufschiene bereit. Ferner können die federnd angeordneten Abstützelemente besser Kurven durchfahren, wobei die federnden Abstützelemente insbesondere eine schnellere Kurvenfahrt erlauben. Gegebenenfalls federn die Abstützelemente nämlich bei einem starken Kontakt mit der Laufschiene ein und vermeiden dadurch einen unerwünschten Verschleiß. Dies führt zu einer Kraftminimierung.

Die Unteransprüche zeigen bevorzugte Weiterbildungen der Erfindung.

Bevorzugt ist das bewegbare Element eingliedrig ausgebildet. Das Element kann auch mehrgliedrig ausgebildet sein.

Vorzugsweise ist der Winkel des Kontaktbereichs zu einer Hochachse und Querachse in einem Bereich von 30° bis 60°, vorzugsweise ungefähr 45°. Hierdurch können auch sehr enge Kurven und Gegenkurven ohne Rutschen durchfahren werden.

Besonders bevorzugt sind alle Kontaktbereiche der Abstützelemente in einem Winkel ungleich 90° zu einer Hochachse und Querachse angeordnet. Dadurch wird vermieden, dass einzelne, nicht erfindungsgemäß angeordnete Abstützelemente eventuell bei einer Kurvenfahrt gleiten und somit eine Abnutzung oder ein Verschleiß oder dergleichen auftritt.

Die Abstützelemente sind vorzugsweise als Rollen und/oder Gleitelemente und/oder Levitationselemente, d.h., frei schwebende Elemente, vorgesehen.

Weiter bevorzugt sind wenigstens zwei Abstützelemente vorgesehen, wobei die beiden Abstützelemente in unterschiedlichen Winkeln ungleich 90° zu einer Hochachse und Querachse angeordnet sind.

Vorzugsweise umfasst die Transfervorrichtung einen Trägerrahmen mit einer Öffnung, so dass ein offener, nicht umlaufend geschlossener, Trägerrahmen vorgesehen ist.

Besonders bevorzugt ist der Trägerrahmen aus einem Verbundmaterial mit einer äußeren Hülle und einem Kern ausgebildet, wobei der Trägerrahmen dämpfende Eigenschaften aufweist. Insbesondere weist der Trägerrahmen durch Wahl des Materials des Kerns dämpfende Eigenschaften auf. Beispielsweise ist das Material des Kerns Aluminium und die Hülle des Trägerrahmens ist aus einem Kohlenstofffaser-verstärkten Kunststoff.

Weiter bevorzugt ist die offene Seite des Trägerrahmens vorzugsweise an einer zur Laufschiene gerichteten Seite. Dadurch kann das bewegbare Element auf der Laufschiene z.B. aufsitzen oder an dieser hängen. Die Form des offenen Trägerrahmens ist vorzugsweise entsprechend einem umgekehrt angeordneten U oder V, oder einem T, oder einem X, oder einem Y, oder einem geschlitzten O.

Weiter bevorzugt ist das bewegbare Element symmetrisch zur Hochachse ausgebildet. Weiter bevorzugt sind am bewegbaren Element Permanentmagnete angeordnet, welche am Trägerrahmen an einer zur Laufschiene gerichteten Seite angeordnet sind. Die Permanentmagnete sind dabei Teil der Linearmotor-Antriebsvorrichtung, wobei in der Laufschiene eine bestrombare Spule angeordnet ist. Die Permanentmagnete sind vorzugsweise am Trägerrahmen im Bereich der Öffnung angeordnet.

Für einen besonders ruhigen Lauf des bewegbaren Elements ist vorzugsweise ein Drehpunkt des bewegbaren Elements im Bereich der Permanentmagnete angeordnet.

Die Permanentmagnete sind vorzugsweise mittels Haltern oder dergleichen an dem Trägerrahmen des bewegbaren Elements angeordnet. Weiter bevorzugt sind auch die Abstützelemente des bewegbaren Elements mittels Haltern am Trägerrahmen angeordnet. Hierdurch kann durch Auswahl verschiedener Halter ein Standard-Trägerrahmen verwendet werden und die verschiedenen Halter jeweils eine entsprechende Anpassung an unterschiedliche Laufschienen ermöglichen. Die Halter sind bevorzugt austauschbar vorgesehen.

Besonders bevorzugt umfasst die Linearmotor-Antriebsvorrichtung mehrere Antriebe. Die Vielzahl der Antriebe ist vorzugsweise parallel zueinander angeordnet, alternativ sind die Vielzahl der Antriebe winklig zueinander angeordnet. Weiter bevorzugt umfasst die Laufschiene eine Weiche. Die Weiche ist vorzugweise als Linear-Weiche ausgebildet, welche durch Parallelverschieben eines Laufschienenstücks von einer ersten Laufschiene auf eine zweite Laufschiene gewechselt wird. Alternativ umfasst die Laufschiene eine Rotations-Weiche, wobei ein Laufschienenstück drehbar angeordnet ist und durch Rotation von einer ersten Laufschiene auf eine zweite Laufschiene ausgerichtet wird.

### Zeichnung

Nachfolgend werden bevorzugte Ausführungsbeispiele der Erfindung unter Bezugnahme auf die begleitende Zeichnung im Detail beschrieben. In der Zeichnung ist:
- Figur 1: eine schematische, teilweise geschnittene Ansicht einer Transfervorrichtung gemäß einem Ausführungsbeispiel der Erfindung,
- Figur 2: eine schematische, perspektivische Ansicht eines bewegbaren Elements der Transfervorrichtung von Figur 1, und
- Figuren 3 bis 10: weitere bevorzugte Ausführungsbeispiele der Erfindung.

### Bevorzugte Ausführungsform der Erfindung

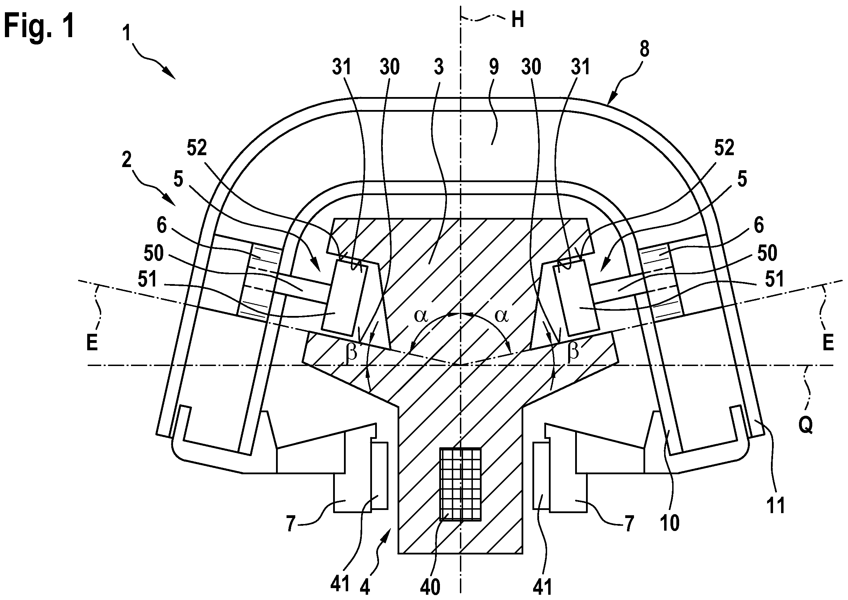

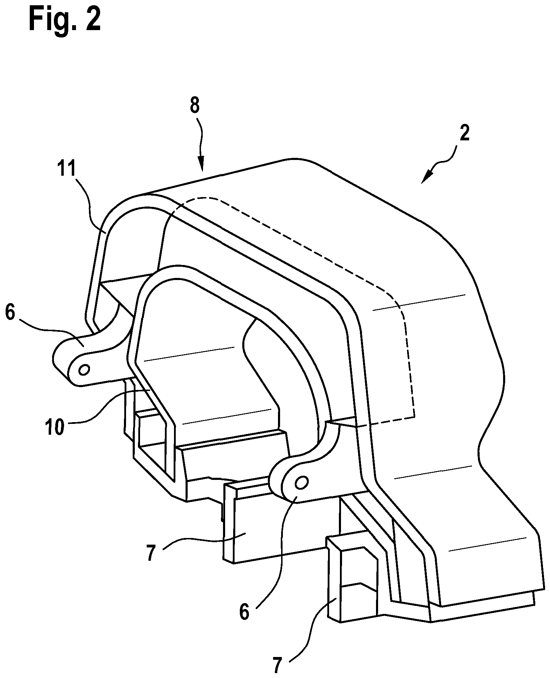

Nachfolgend wird unter Bezugnahme auf die Figuren 1 und 2 eine Transfervorrichtung 1 gemäß einem bevorzugten Ausführungsbeispiel der Erfindung im Detail beschrieben.

Wie aus Figur 1 ersichtlich ist, umfasst die erfindungsgemäße Transfervorrichtung 1 wenigstens ein bewegbares Element 2, welches auf einer Laufschiene 3 bewegbar ist. Die Laufschiene 3 kann eine umlaufend geschlossene Laufschiene sein oder alternativ auch eine linienförmige Laufschiene sein. Vorzugsweise sind eine Vielzahl von bewegbaren Elementen 2 auf der Laufschiene 3 angeordnet, welche jeweils individuell ansteuerbar sind. Derartige Transfervorrichtungen werden beispielsweise beim Zuführen von Produkten zu/und beim Abführen von Produkten von Maschinen, insbesondere Verpackungsmaschinen, verwendet.

Die Transfervorrichtung 1 umfasst ferner eine Linearmotor-Antriebsvorrichtung 4, welche eine in die feststehende Laufschiene 3 integrierte Spule 40 sowie Permanentmagnete 41 umfasst, wobei die Permanentmagnete 41 am bewegbaren Element 2 angeordnet sind.

An der Laufschiene 3 sind ferner Laufflächen 30, 31 vorgesehen.

Weiterhin umfasst das bewegbare Element einen offenen Trägerrahmen 8. Der Trägerrahmen 8 umfasst einen Kern 9 sowie eine innere Hülle 10 und eine äußere Hülle 11. Der Kern 9 ist vorzugsweise aus Aluminium hergestellt und die beiden Hüllen sind vorzugsweise aus einem Kohlenstoffverbundwerkstoff hergestellt. Der Trägerrahmen 8 ist hierbei an einem unteren Ende offen und weist im Querschnitt eine auf dem Kopf stehende, im Wesentlichen U-Form auf. Dadurch sitzt das bewegbare Element 2 auf der Laufschiene 3 auf.

Wie aus Figur 1 ersichtlich ist, sind an der Öffnung des Trägerrahmens 8 die Permanentmagnete 41 angeordnet.

Das bewegbare Element 2 umfasst ferner Abstützelemente 5. In diesem Ausführungsbeispiel umfasst das bewegbare Element genau zwei Abstützelemente. Die Abstützelemente dieses Ausführungsbeispiels umfassen jeweils eine Welle 50, an deren freiem Ende jeweils eine Rolle 51 angeordnet ist. Die Rollen 51 weisen an ihrem äußeren Umfang Laufflächen 52 auf. Die Abstützelemente 5 sind mittels ersten Haltern 6 am Trägerrahmen 8 des bewegbaren Elements befestigt (vergleiche Figur 2).

Das bewegbare Element 2 weist ferner eine Hochachse H und eine Querachse Q auf. Die Hochachse H ist dabei senkrecht zur Querachse Q.

Ein Kontaktbereich des Abstützelements 5 wird somit durch die Lauffläche 52 der Rollen 51 bereitgestellt. Bei Kontakt mit den Laufflächen 30, 31 der Laufschiene 3 ergibt sich somit eine Kontaktlinie. Die Kontaktlinie liegt dabei in einer Ebene E, welche in einem Winkel α ungleich 90° zur Hochachse H und einem Winkel β ungleich 90° zur Querachse Q angeordnet ist. Durch diese geneigte Anordnung des Abstützelements relativ zur Hochachse H und zur Querachse Q ist es nun möglich, dass auch enge Kurven der Laufschiene 3 vom bewegbaren Element 2 ohne Gleiten oder Rutschen durchfahren werden können. Erfindungsgemäß ist dabei sichergestellt, dass die Rollen 51 nicht bzw. nur minimal gleiten, sondern in jeder Stellung auf den Laufflächen 30, 31 der Laufschiene 3 abrollen. Hierdurch kann eine bisher im Stand der Technik vorkommende Abnutzung bzw. ein Verschleiß sowohl der Abstützelemente 5 als auch der Laufflächen an der Laufschiene 3 minimiert werden.

Im dargestellten Ausführungsbeispiel sind die beiden Abstützelemente 5 jeweils in gleichem Winkel α und β zur Hochachse H und zur Querachse Q angeordnet. Es sei angemerkt, dass alternativ jedoch auch die beiden Abstützelemente in unterschiedlichen Winkeln angeordnet sein können, wobei jedoch Winkel von 0° bzw. 90° erfindungsgemäß ausgeschlossen sind. Besonders bevorzugt ist der Winkel α und der Winkel β in einem Bereich von 30° bis 60°, insbesondere bei ungefähr 45°.

Es sei weiter angemerkt, dass, wenn das bewegbare Element 2 eine Vielzahl von Abstützelementen 5 aufweist, einzelne Abstützelemente 5 auch jeweils in unterschiedlichen Winkeln zur Querachse Q und zur Hochachse H angeordnet sein können. Alternativ können auch einige der Abstützelemente mit gleichen Winkeln bei einer Vielzahl von Abstützelementen angeordnet sein.

Wenn an Stelle der Rollen 51 beispielsweise Gleitelemente verwendet werden, ergibt sich zwischen den Gleitelementen und den Laufflächen 30, 31 kein linienförmiger Kontakt mehr, sondern ein flächiger Kontakt, wobei auch dann erfindungsgemäß ein Verschleiß signifikant reduziert werden kann.

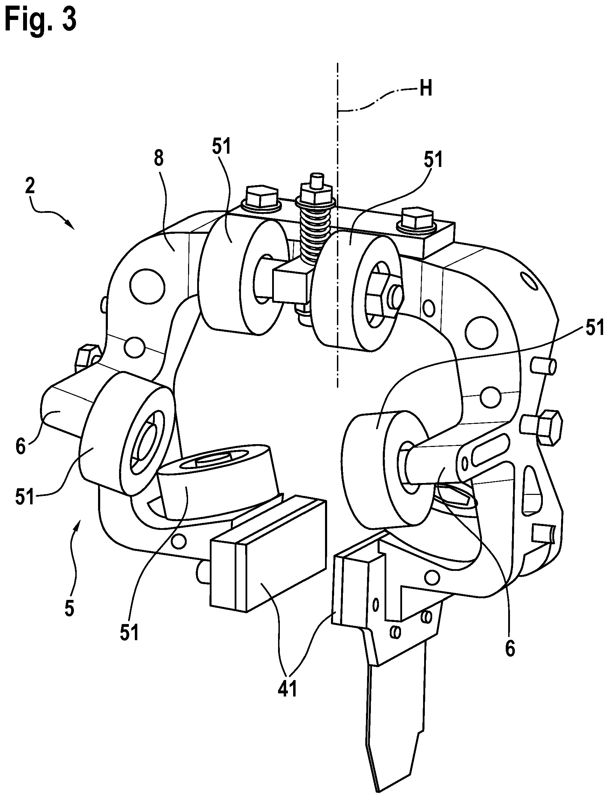

Figur 3 zeigt ein zweites Ausführungsbeispiel, bei dem das bewegbare Element 2 als Abstützelemente genau sechs Rollen aufweist. Hierbei sind vier Rollen in einem Winkel ungleich 90° zur Hochachse H und in einem Winkel ungleich 90° zur Querachse Q angeordnet. Zwei Rollen sind am Übergangsbereich des U-förmigen Trägerrahmens 8 angeordnet.

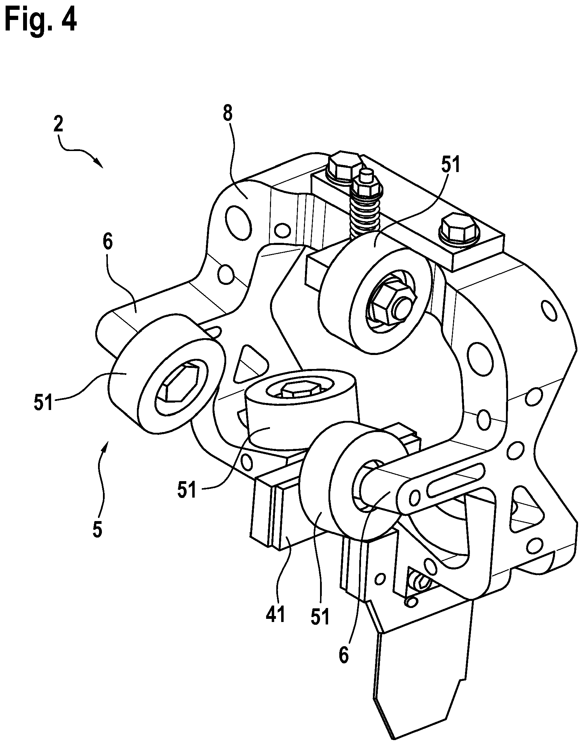

Bei dem in Figur 4 gezeigten dritten Ausführungsbeispiel der Erfindung sind genau fünf Abstützelemente 5 mit Rollen 51 vorgesehen. Am Übergangsbereich des U-förmigen Trägerrahmens 8 ist bei diesem Ausführungsbeispiel nur eine Rolle angeordnet.

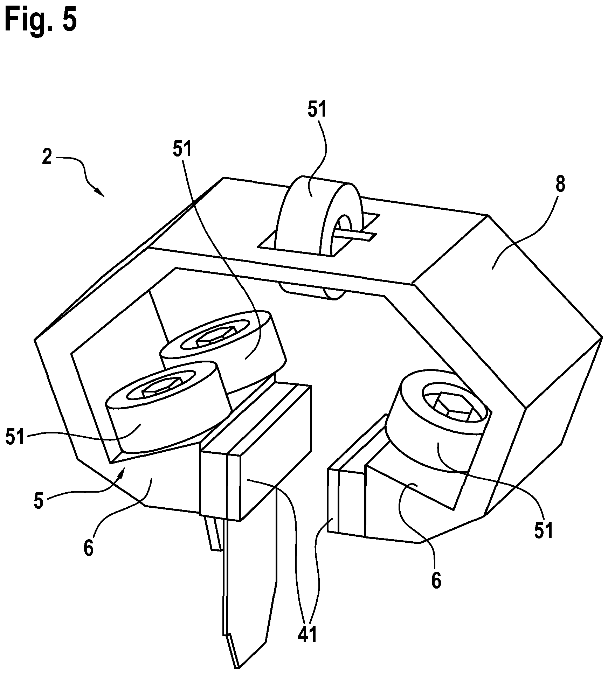

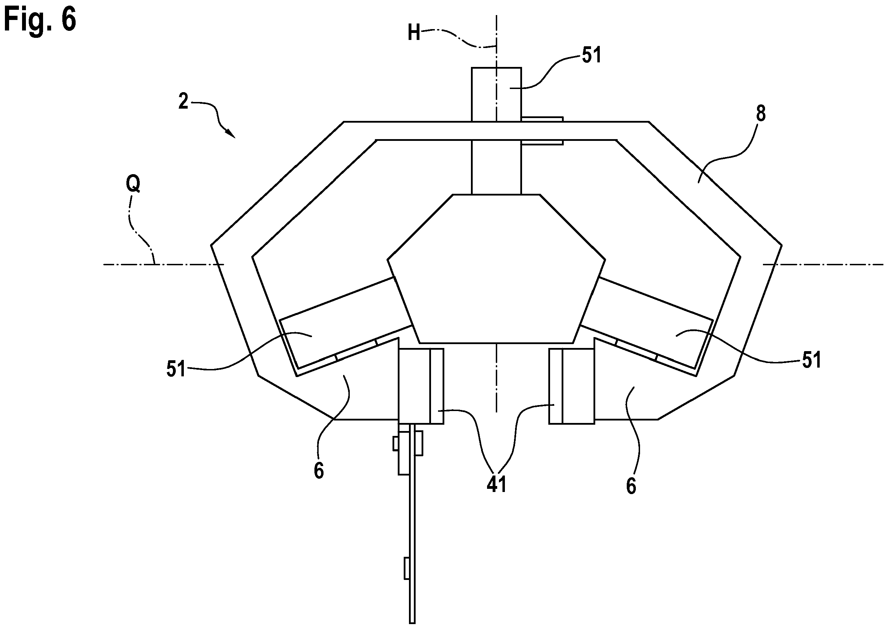

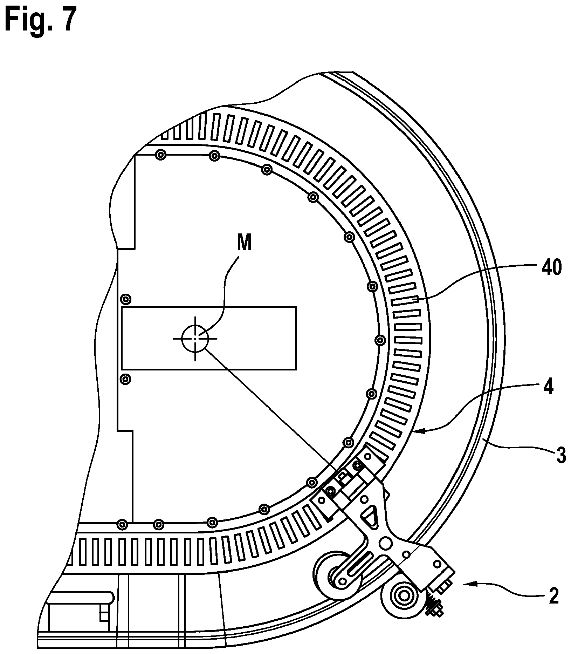

Die Figuren 5 bis 7 zeigen ein viertes Ausführungsbeispiel der Erfindung. Beim vierten Ausführungsbeispiel ist der offene Trägerrahmen 8 eckig ausgebildet. Ferner sind vier Abstützelemente 5 in Form von Rollen 51 vorgesehen. Drei Rollen 51 sind dabei in einem Winkel ungleich 90° zur Hochachse H und ungleich 90° zur Querachse Q angeordnet. Figur 7 zeigt eine Kurvenfahrt des bewegbaren Elements 2. Die Permanentmagnete 41 sind dabei zu einem Kurvenmittelpunkt M ausgerichtet.

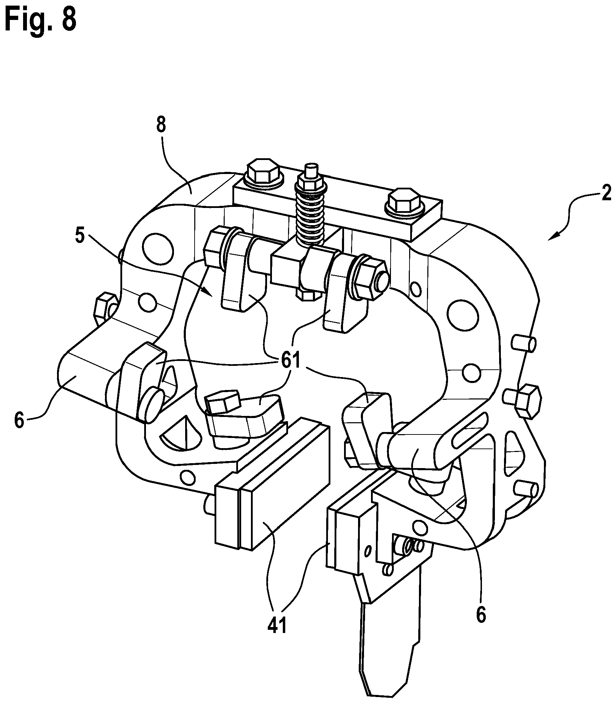

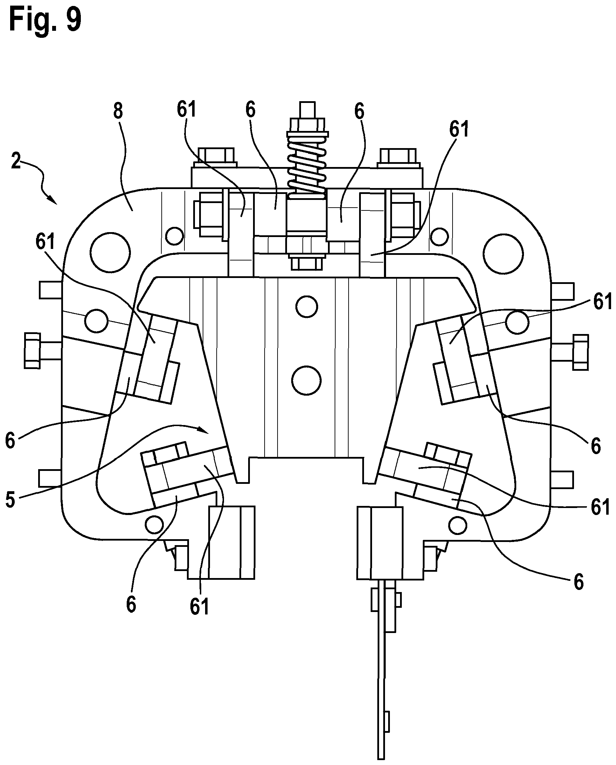

Figuren 8 und 9 zeigen ein fünftes Ausführungsbeispiel der Erfindung, welches im Wesentlichen dem zweiten Ausführungsbeispiel von Figur 3 entspricht. Statt Rollen sind die Abstützelemente 5 in Form von Gleitelementen 61 vorgesehen. Die Gleitelemente 61 gleiten dabei auf der Laufschiene 3. Insgesamt sind sechs Gleitelemente 61 vorgesehen.

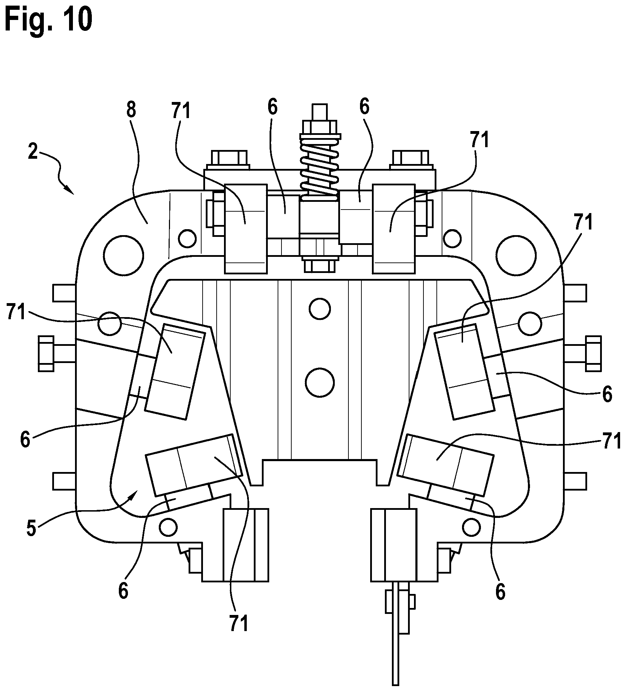

Figur 10 zeigt ein sechstes Ausführungsbeispiel der Erfindung, bei dem die Abstützelemente 5 in Form von Schwebeelementen 71 vorgesehen sind. Wie aus Figur 10 ersichtlich ist, sind ebenfalls zehn Schwebeelemente 71 vorgesehen. Die Anordnung der Schwebeelemente 71 entspricht dabei der Anordnung der Gleitelemente in den Figuren 8 und 9 bzw. der Rollen 51 in Figur 3. Die Schwebeelemente verhindern somit eine Berührung der Laufschiene 3, so dass keinerlei Abnutzung vorhanden ist. Die Schwebeelemente 71 sind dabei derart ausgebildet, dass selbst bei einem Kontakt keine Beschädigung der Schwebeelemente oder der Laufschiene erfolgt. Das Schweben kann beispielsweise durch magnetische Abstoßung realisiert werden.

## Patentansprüche

1. Transfervorrichtung, umfassend
- ein bewegbares Element (2),
- eine feststehende Laufschiene (3), und
- eine Linearmotor-Antriebsvorrichtung (4) zum Antreiben des bewegbaren Elements (2),
- wobei das bewegbare Element (2) Abstützelemente (5) aufweist, welche mit der Laufschiene (3) in Kontakt bringbar sind, und
- wobei wenigstens eines der Abstützelemente (5) einen Kontaktbereich aufweist, welcher in einem Winkel (α) ungleich 90° zu einer Hochachse (H) des bewegbaren Elements (2) und in einem Winkel (β) ungleich 90° zu einer Querachse (Q) des bewegbaren Elements (2) angeordnet ist,
**dadurch gekennzeichnet, dass**
- die Abstützelemente (5) federnd gelagert sind.

2. Transfervorrichtung nach Anspruch 1, **dadurch gekennzeichnet, dass** das bewegbare Element (2) eingliedrig ausgebildet ist.

3. Transfervorrichtung nach Anspruch 1 oder 2, **dadurch gekennzeichnet, dass** der Winkel (α) in einem Bereich von 30° bis 60° liegt und insbesondere ungefähr 45° beträgt.

4. Transfervorrichtung nach einem der vorhergehenden Ansprüche, **dadurch gekennzeichnet, dass** alle Abstützelemente (5) einen Kontaktbereich aufweisen, welcher in einem Winkel (α) ungleich 90° zur Hochachse (H) und ungleich 90° zur Querachse (Q) angeordnet sind.

5. Transfervorrichtung nach einem der vorhergehenden Ansprüche, **dadurch gekennzeichnet, dass** die Abstützelemente (5) Rollen (51) und/oder Gleitelemente und/oder Levitationselemente sind.

6. Transfervorrichtung nach einem der vorhergehenden Ansprüche, **dadurch gekennzeichnet, dass** wenigstens zwei Abstützelemente (5) in einem unterschiedlichen Winkel (α) zur Hochachse (H) und zur Querachse (Q) angeordnet sind.

7. Transfervorrichtung nach einem der vorhergehenden Ansprüche, **dadurch gekennzeichnet, dass** das bewegbare Element (2) einen offenen Trägerrahmen (8) umfasst, welcher an wenigstens einer Seite eine Öffnung aufweist.

8. Transfervorrichtung nach Anspruch 7, **dadurch gekennzeichnet, dass** der offene Trägerrahmen (8) einen Kern (9), eine innere Hülle (10) und eine äußere Hülle (11) umfasst, wobei insbesondere der Kern (9) ein Aluminiumkern ist und die innere und äußere Hülle ein Kohlenstofffaserverstärkter Kunststoff ist.

9. Transfervorrichtung nach einem der Ansprüche 7 oder 8, **dadurch gekennzeichnet, dass** das bewegbare Element (2) Permanentmagnete (41) der Linearmotor-Antriebsvorrichtung (4) aufweist, welche am Trägerrahmen (8) an der Öffnung des Trägerrahmens angeordnet sind.

10. Transfervorrichtung nach Anspruch 9, **dadurch gekennzeichnet, dass** ein Drehpunkt des bewegbaren Elements in einem Bereich zwischen den Permanentmagneten (41) liegt.

11. Transfervorrichtung nach einem der vorhergehenden Ansprüche, **dadurch gekennzeichnet, dass** die Abstützelemente (5) und/oder die Permanentmagnete (41) am bewegbaren Element (2) mittels Haltern (6, 7) angeordnet sind.

## Claims

1. Transfer device, comprising
- a movable element (2),
- a stationary running rail (3), and
- a linear motor drive device (4) for driving the movable element (2),
- the movable element (2) having support elements (5) which can be brought into contact with the running rail (3), and
- at least one of the support elements (5) having a contact region, which is arranged at an angle (α) not equal to 90° to a vertical axis (H) of the movable element (2) and is arranged at an angle (β) not equal to 90° to a transverse axis (Q) of the movable element (2),
**characterized in that**
- the support elements (5) are spring-loaded.

2. Transfer device according to Claim 1, **characterized in that** the movable element (2) is formed as one member.

3. Transfer device according to Claim 1 or 2, **characterized in that** the angle (α) lies in the range from 30° to 60° and is in particular approximately 45°.

4. Transfer device according to one of the preceding claims, **characterized in that** all the support elements (5) have a contact region, which contact regions are arranged at an angle (α) not equal to 90 ° to the vertical axis (H) and not equal to 90 ° to the transverse axis (Q).

5. Transfer device according to one of the preceding claims, **characterized in that** the support elements (5) are rollers (51) and/or sliding elements and/or levitation elements.

6. Transfer device according to one of the preceding claims, **characterized in that** at least two support elements (5) are arranged at a different angle (α) to the vertical axis (H) and to the transverse axis (Q).

7. Transfer device according to one of the preceding claims, **characterized in that** the movable element (2) comprises an open support frame (8), which has an opening on at least one side.

8. Transfer device according to Claim 7, **characterized in that** the open support frame (8) comprises a core (9), an inner sleeve (10) and an outer sleeve (11), wherein in particular the core (9) is an aluminium core and the inner and outer sleeve is a carbon fibre reinforced plastic.

9. Transfer device according to either of Claims 7 and 8, **characterized in that** the movable element (2) has permanent magnets (41) of the linear motor drive device (4), which are arranged on the support frame (8), at the opening of the support frame.

10. Transfer device according to Claim 9, **characterized in that** a pivot of the movable element is located in a region between the permanent magnets (41).

11. Transfer device according to one of the preceding claims, **characterized in that** the support elements (5) and/or the permanent magnets (41) are arranged on the movable element (2) by means of holders (6, 7) .

## Revendications

1. Ensemble de transfert comprenant :
- un élément mobile (2),
- un rail de déplacement fixe (3) et
- un ensemble d'entraînement (4) à moteur linéaire qui entraîne l'élément mobile (2),
- l'élément mobile (2) présentant des éléments de soutien (5) qui peuvent être mis en contact avec le rail de déplacement (3) et
- au moins l'un des éléments de soutien (5) présentant une zone de contact qui est disposée à un angle (α) différent de 90° par rapport à l'axe supérieur (H) de l'élément mobile (2) et à un angle (β) différent de 90° par rapport à un axe transversal (Q) de l'élément mobile (2),
**caractérisé en ce que**
- les éléments de soutien (5) sont montés élastiquement.

2. Ensemble de transfert selon la revendication 1, **caractérisé en ce que** l'élément mobile (2) est formé d'une seule pièce.

3. Ensemble de transfert selon les revendications 1 ou 2, **caractérisé en ce que** l'angle (α) est compris dans la plage de 30° à 60° et vaut en particulier environ 45°.

4. Ensemble de transfert selon l'une des revendications précédentes, **caractérisé en ce que** tous les éléments de soutien (5) présentent une zone de contact disposée à un angle (α) différent de 90° par rapport à l'axe supérieur (H) et différent de 90° par rapport à l'axe transversal (Q).

5. Ensemble de transfert selon l'une des revendications précédentes, **caractérisé en ce que** les éléments de soutien (5) sont des galets (51), des éléments coulissants et/ou des éléments de lévitation.

6. Ensemble de transfert selon l'une des revendications précédentes, **caractérisé en ce qu'**au moins deux éléments de soutien (5) sont disposés à un angle (α) différent par rapport à l'axe supérieur (H) et à l'axe transversal (Q).

7. Ensemble de transfert selon l'une des revendications précédentes, **caractérisé en ce que** l'élément mobile (2) présente un cadre de support (8) qui présente une ouverture sur au moins un côté.

8. Ensemble de transfert selon la revendication 7, **caractérisé en ce que** le cadre de support (8) ouvert comporte une âme (9), une enveloppe intérieure (10) et une enveloppe extérieure (11), l'âme (9) étant en particulier une âme en aluminium, l'enveloppe intérieure ainsi que l'enveloppe extérieure étant réalisées en un matière synthétique renforcée de fibres de carbone.

9. Ensemble de transfert selon l'une des revendications 7 ou 8, **caractérisé en ce que** l'élément mobile (2) présente les aimants permanents (41) de l'ensemble d'entraînement (4) à moteur linéaire, qui sont disposés sur le bâti du support (8) au niveau de l'ouverture du bâti de support.

10. Ensemble de transfert selon la revendication 9, **caractérisé en ce qu'**un centre de rotation de l'élément mobile est disposé dans une partie située entre les aimants permanents (41).

11. Ensemble de transfert selon l'une des revendications précédentes, **caractérisé en ce que** les éléments de soutien (5) et/ou les aimants permanents (41) sont disposés sur l'élément mobile (2) au moyen de supports (6, 7).
